(19) Europäisches Patentamt / European Patent Office / Office européen des brevets

(11) **EP 2 668 802 B1**

(12) **EUROPEAN PATENT SPECIFICATION**

(45) Date of publication and mention
of the grant of the patent:
**07.12.2016 Bulletin 2016/49**

(21) Application number: **11857143.9**

(22) Date of filing: **27.01.2011**

(51) Int Cl.:
***H04W 76/00*** (2009.01)         *H04W 4/06* (2009.01)
***H04W 28/18*** (2009.01)

(86) International application number:
**PCT/CN2011/000131**

(87) International publication number:
**WO 2012/100371 (02.08.2012 Gazette 2012/31)**

(54) **METHOD AND APPARATUS FOR ALLOCATING TRANSPORT CHANNELS FOR MULTIMEDIA BROADCAST MULTICAST SERVICE**

VERFAHREN UND VORRICHTUNG ZUR ZUWEISUNG VON TRANSPORTKANÄLEN FÜR EINEN MULTIMEDIA-MULTICAST-RUNDFUNKDIENST

PROCÉDÉ ET APPAREIL POUR ALLOUER DES CANAUX DE TRANSPORT POUR UN SERVICE DE TRANSMISSION DE DONNÉES MULTIMÉDIAS EN DIFFUSION/MULTIDIFFUSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.12.2013 Bulletin 2013/49**

(73) Proprietor: **Telefonaktiebolaget LM Ericsson (publ)**
**164 83 Stockholm (SE)**

(72) Inventor: **ZHAO, Shuang**
**Beijing 100020 (CN)**

(74) Representative: **Lind, Robert**
**Marks & Clerk LLP**
**Fletcher House**
**Heatley Road**
**The Oxford Science Park**
**Oxford OX4 4GE (GB)**

(56) References cited:
| | |
|---|---|
| **EP-A1- 1 650 989** | **EP-A2- 1 658 739** |
| **WO-A1-2007/027032** | **WO-A1-2007/027032** |
| **CN-A- 1 812 626** | **CN-A- 101 378 541** |
| **CN-A- 101 754 100** | **US-A1- 2005 169 202** |

**Description**

TECHNICAL FIELD

The present invention relates generally to the field of wireless communication, and more particularly to method for allocating transport channels for Multimedia Broadcast Multicast Service (MBMS) and apparatus and system associated therewith.

BACKGROUND

Indisputably, tomorrow's mobile marketplace will be characterized by bandwidth-hungry multimedia services that are already experienced in wired networks. Based on this situation, MBMS was introduced in the R6 of UMTS (Universal Mobile Telecommunication System) in order to deliver multimedia data from a single source entity to multiple destinations. MBMS is envisaged to play an essential role for further rich multimedia services. So the key goal of MBMS is to provide multimedia services in an efficient way.

The main requirement during the provision of MBMS services is to make an efficient overall usage of radio and network resources. That is to say, a wireless network that provides MBMS services should conceive and adapt to continuous changes occurring in dynamic wireless environments and optimally allocate resources. Accordingly, a critical aspect of MBMS performance is to select a most efficient transport channel for transmission of MBMS data.

MBMS specification 3GPP TS 25.346 adopts two transmission modes, i.e. Point-to-Point (PTP) Transmission and Point-to-Multipoint (PTM) Transmission, to provide MBMS service. In PTP transmission, for a UE in CELL_FACH and CELL_DCH status, DCCH (Dedicated Control Channel) or DTCH (Dedicated Traffic Channel) may be used, allowing all existing mappings to transport channels. In PTM transmission, FACH (Forward Access Channel) is used as a transport channel for logical channels MTCH (MBMS point-to-multipoint Traffic Channel), MSCH (MBMS point-to-multipoint Scheduling Channel) and MCCH (MBMS point-to-multipoint Control

Scheduling Channel) and MCCH (MBMS point-to-multipoint Control Channel).

MBMS specification 3GPP TS 25.346 considers a so called Counting Mechanism and uses this Counting Mechanism to determine whether it is more efficient to deploy PTP bearers, e.g. DCH (Dedicated Channel) or HS-DSCH, or PTM bearers, e.g. FACH, for a given MBMS service. Current specifications of Counting Mechanism use a static switching point between PTP and PTM modes, which switching point is determined based on the number of counted MBMS users in a cell. For example, the MBMS control function may decide to establish a PTM connection if the number of counted MBMS users in the cell exceeds a certain pre-defined threshold. However, the Counting Mechanism fails to achieve an efficient radio resource allocation, because it is impossible to accurately abstract the complex wireless environment and user service profiles by a single parameter, i.e. the number of UEs. Therefore, the Counting Mechanism suffers from inefficiency and may waste significant power resources due to the lack of any adaptive functionality.

EP 1658739 discloses a method of providing MBMS services by transmitting a pilot signal to a plurality of user equipments, sorting the UE's by a strength of pilot signal and assigning a portion of the UE's to a broadcast channel. EP1650989 discloses a method of providing MBMS services by providing a point to multipoint channel with a fixed power level, detects if there are UE's with low service quality and assigns them a dedicated channel.

SUMMARY

An object of the present invention is to provide an improved method, radio network controller and system for allocating transport channels for Multimedia Broadcast Multicast Service, which obviates at least some of the above-mentioned disadvantages, as disclosed by the appended claims.

According to a first aspect of the present invention, the present invention provides a method for allocating transport channels to provide Multimedia Broadcast Multicast Service MBMS services to one or more User Equipments UEs in a cell of a wireless network. The method comprises obtaining parameters including a rate required by a MBMS service and a location factor indicating location of a UE in the cell, determining power cost of providing the MBMS service to the UE for each of types of transport channels available in the cell based on at least the required service rate and the location factor, and selecting a type of transport channel that has a minimum power cost to provide the MBMS service to the UE. The types of transport channels available in the cell include Forward Access Channel FACH, Dedicated Control Channel DCH, and High Speed-Downlink Shared Channel HS-DSCH. The determination of the power cost for HS-DSCH further comprises getting a throughput of a HS-DSCH channel for the location factor, estimating a proportion of HS-DSCH resource occupied by the MBMS service based on a ratio of the required service rate to the gotten throughput, and determining the power cost for the HS-DSCH channel based on a power level assigned to the HS-DSCH channel and the determined proportion of HS-DSCH resource occupied.

Preferably, determination of the power cost for FACH comprises estimating a power level for a FACH channel based on the required service rate and the location factor, and determining the power cost for the FACH channel based on the estimated power level and the number of UEs that are served by the FACH channel at the estimated power level.

Preferably, determination of the power cost for DCH comprises estimating a power level for a DCH channel based on the required service rate and the location factor, and determining the power cost for the DCH channel based on the estimated power level.

Preferably, determination of the power costs for HS-DSCH, FACH, DCH comprises calculating the power costs as follows:

$$C_{HS} = P_{HS} * (R/Th(L));$$

$$C_{FACH} = P_{FACH}(L,R) * (TS/N_{slot})/N_{UE},$$

and

$$C_{DCH} = P_{DCH}(L,R);$$

where $C_{HS}$, $C_{FACH}$, $C_{DCH}$ designate power costs for HS-DSCH, FACH and DCH respectively, $P_{HS}$, $P_{FACH}$, $P_{DCH}$ designate power levels for HS-DSCH, FACH and DCH respectively, R is the required service rate, L is the location factor, Th(L) is the throughput of the HS-DSCH channel with respect to the location factor L, TS refers to the number of time slots per frame to be occupied by the MBMS service, $N_{slot}$ refers to the total number of time slots per frame, and $N_{UE}$ is the number of UEs served by the FACH channel at $P_{FACH}$.

Preferably, the location factor is expressed as a ratio of signal power received at the UE to signal power transmitted by a base station that serves the cell.

Preferably, the allocation of transport channels is triggered when a new UE requests the MBMS service or an existing UE quits from the MBMS service. In addition or alternatively, the allocation of transport channels is triggered at a time interval.

According to a second aspect of the present invention, the present invention provides a Radio Network Controller RNC for allocating transport channels to provide Multimedia Broadcast Multicast Service MBMS services to one or more UEs in a cell of a wireless network. The RNC comprises an obtaining unit being configured to obtain parameters including a rate required by the MBMS service and a location factor indicating location of a UE in the cell, a determining unit being configured to determine power cost of providing the MBMS service to the UE for each type of transport channels available in the cell based on at least the required service rate and the location factor, and a selector being configured to select a type of transport channel that has a minimum power cost to provide the MBMS service to the UE. The types of transport channels available in the cell include Forward Access Channel FACH, Dedicated Control Channel DCH, and High Speed-Downlink Shared Channel HS-DSCH. The determining unit is further configured to get a throughput of a HS-DSCH channel for the location factor, estimate a proportion of HS-DSCH resource occupied by the MBMS service based on a ratio of the required service rate to the gotten throughput, and determine the power cost for the HS-DSCH channel based on a power level assigned to the HS-DSCH channel and the determined proportion of HS-DSCH resource occupied.

According to a third aspect of the present invention, the present invention provides a wireless communication system comprising the above Radio Network Controller according to the present invention.

With the present invention, parameters like required service rate R and location factor L of UE are considered when allocating transport channels for MBMS services, which enables the transport channel allocation more adaptive to required service and dynamic wireless environment. Since it is always the transport channel that has the minimum post cost is selected for providing the requested MBMS service, the efficiency of power usage, overall cell throughput and service quality are improved. According to the present invention, it also enables to use PTP and PTM Transmission at the same time in one cell.

BRIEF DESCRIPTION OF THE DRAWINGS

Figure 1 illustrates a possible location distribution of UEs in a cell.

Figure 2 illustrates a transport channel throughput comparison.
Figure 3 illustrates a flow chart of a method according to the present invention.
Figure 4 illustrates a work flow in a wireless network when implementing the present invention therein.
Figure 5 illustrates a block diagram of a Radio Network Controller according to the present invention.

DETAILED DESCRIPTION

In the following description, for purposes of explanation rather than limitation, specific details, such as the particular architecture, interfaces, techniques, etc., are set forth for illustration. However, it will be apparent to those of ordinary skill in the art that other embodiments that depart from these specific details would still be understood to be within the scope of the present invention. Moreover, for the purpose of clarity, detailed descriptions of well-known devices, circuits, and methods are omitted so as not to obscure the description of the present invention. It should be expressly understood that the drawings are included for illustrative purposes and do not represent the scope of the present invention. In the accompanying drawings, like reference numbers in different drawings may designate similar elements.

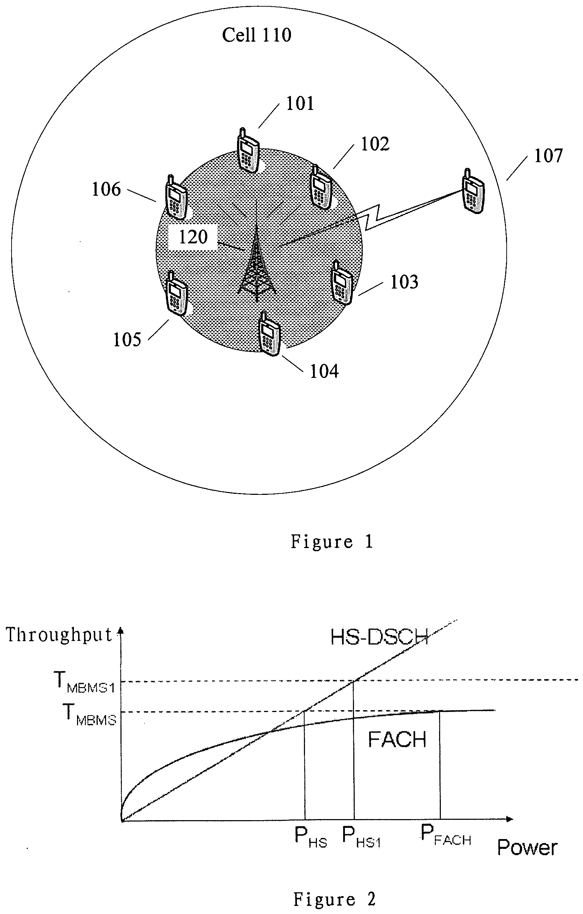

Figure 1 illustrates a possible location distribution of UEs in a cell 110 of a wireless network. As shown in Figure 1, most of the UEs 101-106 are located near the base station that serves the cell, and only one UE 107 is far away from the base station and near the cell edge. In this scenario, if adopting current counting mechanism, then a FACH channel is selected for providing a MBMS service to all requesting UEs when the number of UEs in the cell exceeds a pre-defined threshold, e.g. five. The power level of the FACH channel shall be high enough to meet the C/I (Carrier/Interference) requirement of the UE that is farthest from the base station, here it is UE 107. Such an allocation is power inefficient, since the significant increase of power level of the FACH channel is just for one UE 107. An optimal power allocation scheme for such a location distribution may be that a FACH channel is employed to provide the MBMS service to UEs 101-106 near the base station, while a DCH channel provides the MBMS service to the lonely UE 107 at cell edge.

Figure 2 illustrates a throughput comparison when using different transport channels like FACH and HS-DSCH. FACH is not designed to provide high rate data transmission, a FACH channel needs to consume large amount of power $P_{FACH}$ to meet a high service rate. However, HS-DSCH has a natural advantage for high rate service. As shown in Figure 2, when power level becomes high, a HS-DSCH channel will provide larger throughout than a FACH channel at same power level, and the throughput of a FACH channel will tend to be saturated after the power level reaches a certain level.

Assuming a situation where UEs request a high bit rate MBMS service such as a HD (High Definition) video, and the required cell throughput is $T_{MBMS}$ as shown in Figure 2. When adopting current Counting Mechanism, once the number of UEs in a cell exceeds the counting threshold, FACH would be used as transport channel. The FACH channel may provide the required cell throughput $T_{MBMS}$ at power $P_{FACH}$. However, if the cell throughput required by the MBMS service continues to increase to $T_{MBMS1}$, a FACH channel would be unable to provide such a high rate service, while a HS-DSCH channel could provide the required cell throughput $T_{MBMS1}$ at a power $P_{HS1}$ that is lower than $P_{FACH}$.

As shown in Figure 2, with current Counting Mechanism, valuable power resource of the wireless network may be wasted in some cases, and even a requested MBMS service couldn't be provided.

The root cause of above problems is that it is not sufficient to take account of only the number of UEs in the cell when allocating transport channels.

According to the present invention, at least required service rate R and location factor L that indicates the location of a UE in a cell, e.g. the distance between base station and UE, are considered to allocate the transport channels

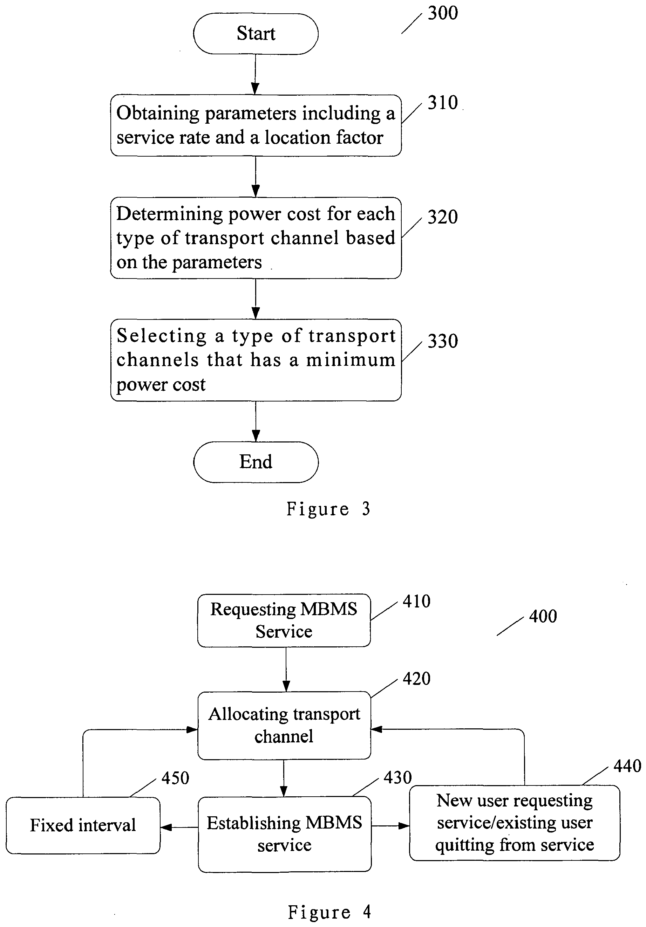

Figure 3 illustrates a flow chart of a method 300 according to the present invention. According to an embodiment of the present invention, when allocating transport channels to provide MBMS services to UEs in a cell, both the location distribution of UEs in the cell and the rate required by MBMS services are taken into account. In the following, the method 300 will be explained in connection with Figures 1 and 2.

In cell 110, there are a number of UEs 101-107 that request a MBMS service from the wireless network. When receiving the requests, a RNC of the wireless network starts to allocate transport channels to different UEs 101-107.

In step 310, parameters including rate required by the requested MBMS service and location factors of respective UEs are obtained. These parameters may be gotten from the wireless network. For example, the required service rate R could be gotten from "MBMS Session Start Request" which is sent from CN (Core Network) to RNC at MBMS session start. As is known, a MBMS session will be started to provide the MBMS service to a UE. A location factor of a UE indicates the location of the UE in the cell, for example, the location may be represented by distance between the base station and the UE. According to one embodiment, the distance is measured by a value of CPICH_RSCP (Common Pilot Channel Received Signal Code Power)/CPICH_Tx_Power. CPICH_RSCP represents the signal power/strength received by the UE, and UE will measure this power and report it to the base station. CPICH_Tx_Power represents the power transmitted by the base station, and is in general configured in the base station. As will be appreciated, said value of CPICH_RSCP/CPICH_Tx_Power will decrease as the distance increases.

In step 320, power costs for different types of transport channels are determined based on the obtained parameters, especially the required service rate R and the location factors L. A wireless network may support many types of transport channels. The RNC may calculate a power cost to provide the requested MBMS service to individual UEs for each type of transport channels available in the wireless network.

In step 330, the calculated power costs associated with same UE are compared, and the type of transport channel that has a minimum power cost is selected to provide the requested MBMS service to the UE. For example, for UE 107 as shown in Figure 1, the power costs for using different types of transport channel, such as DCH, FACH or HS-DSCH channel, to provide the MBMS service to it are respectively calculated, and the transport channel with minimum power cost will be selected as the transport channel for UE 107.

According to one embodiment, if the wireless network supports three types of transport channels, e.g. DCH, FACH and HS-DSCH, then power costs with regard to all these three types of transport channels, i.e. $C_{DCH}$, $C_{FACH}$, $C_{HS}$ will be determined for each UE. Preferably, the power costs are calculated as follows for a particular UE, for example, UE 107. As will be appreciated, same procedure is also applicable to other UEs 101-106.

Preferably, for a HS-DSCH channel, its channel throughput is location-dependent, and in order to determine the power cost, a channel throughput for this HS-DSCH channel with respect to the obtained location factor L of UE 107 is first gotten. Then a proportion of HS-DSCH resource to be occupied by the requested MBMS service is estimated based on the channel throughput and the required service rate R. The power cost $C_{HS}$ is determined based on the power level assigned to the HS-DSCH and the determined proportion.

For example, the power cost $C_{HS}$ may be expressed as:

$$C_{HS} = P_{HS} * (R/Th(L)) \qquad (1)$$

In equation (1), $P_{HS}$ is the power level assigned to HS-DSCH channel, the value of which is generally fixed and decided by network planning and thus could be obtained from the wireless network.

Th(L) stands for the channel throughput of the HS-DSCH channel with respect to a given location factor L, here L is the location factor of UE 107. The value of Th() will decrease as the distance from the base station increases. As will be appreciated, the function Th() could be established by theoretical analysis or based on experiential data during network planning. For example, Th(L) could be embodied as a table showing the relation between L and channel throughput.

Preferably, for a FACH channel, in order to determine the power cost, its power level $P_{FACH}$ to be used is estimated based on the required service rate R and the location factor L of UE 107. Generally speaking, although power level $P_{FACH}$ is time varying and decided by power control algorithm as well as other factors, statistically power level $P_{FACH}$ will increase with the distance and/or the required service rate. For example, in a WCDMA system, transmission power of a FACH channel will be determined based on service requirements on FACH and user measurement reports (including such as CPICH_RSCP etc.). The value of $P_{FACH}$ for given R and L may be obtained in RNC.

Since FACH is a common channel and may serve a number of UEs, the power of a FACH channel will be shared among these UEs. Then, the power cost $C_{FACH}$ is determined based on the estimated $P_{FACH}$ and the number of UEs that are served by the FACH channel.

For example, the power cost $C_{FACH}$ may be expressed as:

$$C_{FACH} = P_{FACH}(L,R) * (TS/N_{slot})/N_{UE} \qquad (2)$$

In equation (2), $P_{FACH}(L,R)$ is the estimated power level for the FACH channel. The value of $P_{FACH}$ will increases as the distance from the base station increases or the required service rate increase.

TS refers to the number of time slots per frame to be occupied by the requested MBMS service, and $N_{slot}$ is the total number of time slots per frame that the FACH channel provides, for example, in a WCDMA system, $N_{slot}$ is 14 per frame. Here, $(TS/N_{slot})$ represents resource occupancy rate of the required MBMS service.

$N_{UE}$ stands for the number of UEs served by the FACH channel at this estimated FACH power level, that is, the number of UEs that could receive the MBMS service on this FACH channel under this power level. Generally speaking, all UEs that are closer to the base station 120 than UE 107, e.g. UEs 101-106 in Figure 1, could also be served at this FACH power level.

Preferably, for a DCH channel, in order to determine the power cost, its power level to be used is estimated based on the required service rate R and the location factor L of UE 107. The way to determine power level of DCH channel $P_{DCH}$ is similar to that for a FACH channel, and the value of $P_{DCH}$ for give L and R may be obtained in RNC. The power cost $C_{DCH}$ is determined based on the estimated $P_{DCH}$.

For example, the power cost $C_{DCH}$ may be expressed as:

$$C_{DCH}=P_{DCH}(L,R) \qquad (3)$$

In equation (3), $P_{DCH}(L,R)$ is the estimated power level for DCH channel. Similar to FACH, the value of $P_{DCH}$ will increases as the distance from the base station increases or the required service rate increases.

After calculation of power costs, an optimal transport channel for UE 107 is selected. For UE 107, three power costs that are determined for HS-DSCH, FACH and DCH respectively. The three power costs $C_{HS-DSCH}$, $C_{FACH}$, $C_{DCH}$ are compared with each other. The transport channel that has minimum power cost is selected as the optimal transport channel for UE 107 to provide the MBMS service.

Referring back to Figures 1 and 2, in case of the distribution of UEs as illustrated in Figure 1, the present invention tends to select FACH for UEs 101-106 and DCH for UE 107. Such an allocation improves efficiency of power usage and overall cell throughput, because UEs 101-106 are served by FACH with a relatively low power level. In case a required service rate is higher than a certain value, the present invention tends to select HS-DSCH to provide the requested MBMS service. Because HS-DSCH channel can gain better throughput by same power usage due to adopting technologies in physical layer, such as H-ARQ (Hybrid Automatic Retransmission Request), Adaptive Modulation and Coding, and MIMO, MBMS capacity and service quality of the wireless network is improved, and a MBMS service of high rate that could not be provided by FACH can be provided by HS-DSCH.

Figure 4 illustrates a work flow 400 in a wireless network when implementing the present invention therein.

As shown in Figure 4, in step 410, a MBMS service is requested by a UE(s) in a wireless network. In step 420, transport channels are allocated to each requesting UE based on the rate required by the MBMS service and the location of the UE according to the method of the present invention. In step 430, the MBMS service is established, and is provided to each requesting UE through respective allocated transport channel. In step 440, when a new UE requests the MBMS service or an existing UE quits from the MBMS service, a re-allocation of transport channels is triggered since such a change would result in different UE distribution. RNC needs to re-calculate power cost for each UE that is currently requesting the MBMS service and then re-allocate transport channels to respective UEs.

Additionally or alternatively, the re-allocation of transport channels may be triggered after a time interval, e.g. a fixed interval, in step 450. This is because UEs are always moving, and then the distribution of UEs may change over time. In this case, a re-allocation of transport channels will be triggered so as to adapt to the distribution change of UEs.

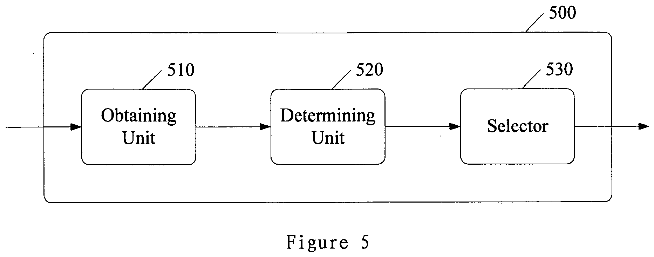

Figure 5 illustrates a block diagram of a Remote Network Controller 500 according to the present invention. The RNC 500 implements the allocation of transport channels according to the present invention.

The RNC 500 comprises obtaining unit 510, determining unit 520 and selector 530 that are operatively coupled together.

When RNC 500 is to allocate a transport channel for a UE to provide it a requested MBMS service, obtaining unit 510 obtains parameters including rate required by the requested MBMS service and location factor of the UE.

These obtained parameters are notified to determining unit 520, in which power costs with regard to different types of transport channels are respectively determined for the UE based on the obtained parameters, especially the required service rate R and the location factor L.

Preferably, determining unit 520 estimates power levels for FACH channel based on the required service rate and the location factor and calculates the power cost for the FACH channel based on the estimated power level and the number of UEs that are provided with the MBMS session via the FACH channel. Preferably, determining unit 520 gets a throughput of a HS-DSCH channel for the location factor, determine a proportion of HS-DSCH resource occupied by the MBMS service based on a ratio of the required service rate and the throughput, and calculates the power cost for a HS-DSCH channel based on a power level assigned to the HS-DSCH channel and the determined proportion. Preferably, determining unit 520 calculates the power cost for a DCH channel based on an estimated power level for the DCH channel.

Selector 530 receives the determined power costs for different types of transport channels, compares the power costs, and selects the type of transport channel that has a minimum power cost to provide the requested MBMS service to the UE.

Since a RNC according to the present invention would adaptively allocate a transport channel for each MBMS UE based on at lease a required service rate and the UE's location, the solution of the present invention improves the transport channel allocation and thus optimizes power usage of MBMS.

The present invention can be applied for all kinds of wireless communication systems like WCDMA, TD-SCDMA, etc.

As will be appreciated by one of skill in the art, the present invention may be embodied as a method, apparatus, system, or computer program product. Accordingly, the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, the present invention may take the form of a computer program product on a computer-usable storage medium having computer-usable program code embodied in the medium.

The present invention has been described with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

Although specific embodiments have been illustrated and described herein, those of ordinary skill in the art appreciate that any arrangement which is calculated to achieve the same purpose may be substituted for the specific embodiments shown and that the invention has other applications in other environments. This application is intended to cover any adaptations or variations of the present invention.

Abbreviations

| | |
|---|---|
| MBMS | Multimedia Broadcast Multicast Service |
| PTP | Point-to-Point |
| PTM | Point-to-Multipoint |
| FACH | Forward Access Channel |
| DCH | Dedicated Channel |
| HS-DSCH | High Speed-Downlink Shared Channel |
| RNC | Radio Network Controller |

**Claims**

1. A method for allocating transport channels to provide Multimedia Broadcast Multicast Service MBMS services to one or more User Equipments UEs (101-107) in a cell (110) of a wireless network, the MBMS services being requested by the one or more UEs, the method comprising:

obtaining parameters including a rate required by a MBMS service and a location factor indicating location of a UE in the cell (310),
determining power cost of providing the MBMS service to the UE for each of types of transport channels available in the cell based on at least the required service rate and the location factor (320), and
selecting a type of transport channel that has a minimum power cost to provide the MBMS service to the UE (330), wherein the step of determining power cost comprises:

getting a throughput of a shared channel for the location factor,
estimating a proportion of a shared channel resource occupied by the MBMS service based on a ratio of the required service rate to the gotten throughput, and
determining the power cost for the shared channel based on a power level assigned to the shared channel and the determined proportion of the shared channel resource occupied.

2. A method according to claim 1, wherein the types of transport channels available in the cell include Forward Access Channel FACH, Dedicated Control Channel DCH, and High Speed-Downlink Shared Channel HS-DSCH.

3. A method according to claim 2, wherein the shared channel is a High Speed-Downlink Shared Channel HS-DSCH.

4. A method according to claim 1, wherein the step of determining comprising:

estimating a power level for a FACH channel based on the required service rate and the location factor, and
determining the power cost for the FACH channel based on the estimated power level and the number of UEs that are served by the FACH channel at the estimated power level.

5. A method according to claim 1, wherein the step of determining comprising:

estimating a power level for a DCH channel based on the required service rate and the location factor, and determining the power cost for the DCH channel based on the estimated power level.

6. A method according to claim 1, wherein the step of determining comprising:

   calculating the power costs as follows:

   $$C_{HS} = P_{HS}*(R/Th(L));$$

   $$C_{FACH} = P_{FACH}(L,R)*(TS/N_{slot})/N_{UE},$$

   and

   $$C_{DCH} = P_{DCH}(L,R);$$

   where $C_{HS}$, $C_{FACH}$, $C_{DCH}$ designate power costs for HS-DSCH, FACH and DCH respectively,
   $P_{HS}$, $P_{FACH}$, $P_{DCH}$ designate power levels for HS-DSCH, FACH and DCH respectively,
   R is the required service rate, L is the location factor,
   Th(L) is the throughput of the HS-DSCH channel with respect to the location factor L,
   TS refers to the number of time slots per frame to be occupied by the MBMS service, $N_{slot}$ refers to the total number of time slots per frame, and $N_{UE}$ is the number of UEs served by the FACH channel at $P_{FACH}$.

7. A method according to claim 1, wherein the location factor is expressed as a ratio of signal power received at the UE to signal power transmitted by a base station (120) that serves the cell (110).

8. A method according to claim 1, wherein the allocation is triggered when a new UE requests the MBMS service or an existing UE quits from the MBMS service (440).

9. A method according to claim 1, wherein the allocation is triggered at a time interval (450).

10. A Radio Network Controller RNC (500) for allocating transport channels to provide Multimedia Broadcast Multicast Service MBMS services to one or more UEs (101-107) in a cell (110) of a wireless network, the RNC comprising:

    an obtaining unit (510) being configured to obtain parameters including a rate required by a MBMS service and a location factor indicating location of a UE in the cell,
    a determining unit (520) being configured to determine power cost of providing the MBMS service to the UE for each type of transport channels available in the cell based on at least the required service rate and the location factor, and further configured to:

    get a throughput of a shared channel for the location factor,
    estimate a proportion of a shared resource occupied by the MBMS service based on a ratio of the required service rate to the gotten throughput, and
    determine the power cost for the shared channel based on a power level assigned to the shared channel and the determined proportion of the shared resource occupied,
    , and
    a selector (530) being configured to select a type of transport channel that has a minimum power cost to provide the MBMS service to the UE .

11. A Radio Network Controller RNC according to claim 10, wherein the types of transport channels available in the cell include Forward Access Channel FACH, Dedicated Control Channel DCH, and High Speed-Downlink Shared Channel HS-DSCH.

12. A Radio Network Controller RNC according to claim 10, wherein the determining unit is configured to get a throughput of a HS-DSCH channel for the location factor, estimate a proportion of HS-DSCH resource occupied by the MBMS service based on a ratio of the required service rate to the gotten throughput, and determine the power cost for the HS-DSCH channel based on a power level assigned to the HS-DSCH channel and the determined proportion of HS-DSCH resource occupied; or

wherein the determining unit is configured to estimate a power level for a FACH channel based on the required service rate and the location factor, and determine the power cost for the FACH channel based on the estimated power level and the number of UEs that are served by the FACH channel at the estimated power level; or wherein the determining unit is configured to estimate a power level for a DCH channel based on the required service rate and the location factor, and determine the power cost for the DCH channel based on the estimated power level.

13. A Radio Network Controller RNC according to claim 9, wherein the determining unit is configured to calculate the power costs as follows:

$$C_{HS} = P_{HS}*(R/Th(L));$$

$$C_{FACH} = P_{FACH}(L,R)*(TS/N_{slot})/N_{UE},$$

and

$$C_{DCH} = P_{DCH}(L,R) ;$$

where $C_{HS}$, $C_{FACH}$, $C_{DCH}$ designate power costs for HS-DSCH, FACH and DCH respectively,
$P_{HS}$, $P_{FACH}$, $P_{DCH}$ designate power levels for HS-DSCH, FACH and DCH respectively,
R is the required service rate, L is the location factor,
Th(L) is the throughput of the HS-DSCH channel with respect to the location factor L,
TS refers to the number of time slots per frame to be occupied by the MBMS service, $N_{slot}$ refers to the total number of time slots per frame, and $N_{UE}$ is the number of UEs served by the FACH channel at $P_{FACH}$.

14. A Radio Network Controller RNC according to claim 8, wherein the location factor is expressed as a ratio of signal power received at the UE to signal power transmitted by a base station (120) that serves the cell (110).

15. A wireless communication system comprising a Radio Network Controller according to claim 10.

**Patentansprüche**

1. Verfahren zur Zuweisung von Transportkanälen, um Multimedia-Multicast-Rundfunkdienste (Multimedia Broadcast Multicast Service, MBMS) an ein oder mehrere Benutzergeräte (User Equipments, UEs) (101-107) in einer Zelle (110) eines drahtlosen Netzwerks bereitzustellen, wobei die MBMS-Dienste von dem einen oder den mehreren UEs angefordert werden, das Verfahren umfassend:

Erlangen von Parametern, einschließlich eines geforderten Tarifs von einem MBMS-Dienst und eines Standortfaktors, der den Standort eines UE in der Zelle (310) angibt,
Bestimmen von Leistungskosten für Bereitstellen des MBMS-Dienstes an das UE für jeden Typ verfügbarer Transportkanäle in der Zelle beruhend auf mindestens dem geforderten Diensttarif und dem Standortfaktor (320), und
Auswählen eines Typs von Transportkanal, der minimale Leistungskosten hat, um den MBMS-Dienst an das UE (330) bereitzustellen,
wobei der Schritt des Bestimmens der Leistungskosten umfasst:

Erhalten eines Durchsatzes eines geteilten Kanals für den Standortfaktor,
Schätzen eines Anteils einer geteilten Kanalressource, die vom MBMS-Dienst belegt wird, beruhend auf einem Verhältnis des geforderten Diensttarifs und des erhaltenen Durchsatzes, und
Bestimmen der Leistungskosten für den geteilten Kanal beruhend auf einem Leistungspegel, der dem geteilten Kanal zugewiesen ist, und dem bestimmten Anteil der belegten geteilten Kanalressource.

2. Verfahren nach Anspruch 1, wobei die Typen verfügbarer Transportkanäle in der Zelle Abwärts-Zugriffskanal (Forward Access Channel, FACH), Festgeschalteten Kanal (Dedicated Control Channel, DCH) und Hochgeschwindigkeits-Downlink-Kanal (High Speed-Downlink Shared Channel HS-DSCH) enthalten.

3. Verfahren nach Anspruch 2, wobei der geteilte Kanal ein Hochgeschwindigkeits-Downlink-Kanal HS-DSCH ist.

4. Verfahren nach Anspruch 1, wobei der Schritt des Bestimmens umfasst:

Schätzen eines Leistungspegels für einen FACH-Kanal beruhend auf dem geforderten Diensttarif und dem Standortfaktor, und
Bestimmen der Leistungskosten für den FACH-Kanal beruhend auf dem geschätzten Leistungspegel und der Anzahl von UEs, die vom FACH-Kanal mit dem geschätzten Leistungspegel bedient werden.

5. Verfahren nach Anspruch 1, wobei der Schritt des Bestimmens umfasst:

Schätzen eines Leistungspegels für einen DCH-Kanal beruhend auf dem geforderten Diensttarif und dem Standortfaktor, und
Bestimmen der Leistungskosten für den DCH-Kanal beruhend auf dem geschätzten Leistungspegel.

6. Verfahren nach Anspruch 1, wobei der Schritt des Bestimmens umfasst:

Berechnen der Leistungskosten wie folgt:

$$C_{HS} = P_{HS}*(R/Th(L));$$

$$C_{FACH} = P_{FACH}(L,R)*(TS/N_{slot})/N_{UE},$$

und

$$C_{DCH} = P_{DCH}(L,R);$$

wobei $C_{HS}$, $C_{FACH}$, $C_{DCH}$ die Leistungskosten für jeweils HS-DSCH, FACH und DCH bezeichnen,
$P_{HS}$, $P_{FACH}$, $P_{DCH}$ Leistungspegel für jeweils HS-DSCH, FACH und DCH bezeichnen,
R der geforderte Diensttarif ist, L der Standortfaktor ist,
Th(L) der Durchsatz des HS-DSCH-Kanals in Bezug auf den Standortfaktor L ist,
TS sich auf die Anzahl Zeitschlitze pro Rahmen bezieht, die vom MBMS-Dienst belegt werden sollen, $N_{slot}$ sich auf die Gesamtanzahl von Zeitschlitzen pro Rahmen bezieht, und $N_{UE}$ die Anzahl von UEs ist, die vom FACH-Kanal mit $P_{FACH}$ bedient werden.

7. Verfahren nach Anspruch 1, wobei der Standortfaktor als ein Verhältnis von Signalleistung, die am UE empfangen wird, und Signalleistung, die von einer Basisstation (120), die die Zelle (110) bedient, übertragen wird, ausgedrückt wird.

8. Verfahren nach Anspruch 1, wobei die Zuweisung ausgelöst wird, wenn ein neues UE den MBMS-Dienst anfordert oder ein vorhandenes UE den MBMS-Dienst (440) verlässt.

9. Verfahren nach Anspruch 1, wobei die Zuweisung in einem Zeitintervall (450) ausgelöst wird.

10. Funknetzsteuerung (Radio Network Controller, RNC) (500) zur Zuweisung von Transportkanälen zum Bereitstellen von Multimedia-Multicast-Rundfunkdienst, MBMS-Dienste an ein oder mehrere UEs (101-107) in einer Zelle (110) eines drahtlosen Netzwerks, die RNC umfassend:

eine Erlangungseinheit (510), die konfiguriert ist, um Parameter zu erlangen, einschließlich eines geforderten Tarifs von einem MBMS-Dienst und eines Standortfaktors, der den Standort eines UE in der Zelle angibt,

eine Bestimmungseinheit (520), die konfiguriert ist, um Leistungskosten für Bereitstellen des MBMS-Dienstes an das UE für jeden Typ verfügbarer Transportkanäle in der Zelle beruhend auf mindestens dem geforderten Diensttarif und dem Standortfaktor zu bestimmen, und die ferner konfiguriert ist:

um einen Durchsatz eines geteilten Kanals für den Standortfaktor zu erhalten,
um einen Anteil einer geteilten Ressource zu schätzen, die vom MBMS-Dienst belegt wird, beruhend auf einem Verhältnis des geforderten Diensttarifs und des erhaltenen Durchsatzes, und
um die Leistungskosten für den geteilten Kanal beruhend auf einem Leistungspegel, der dem geteilten Kanal zugewiesen ist, und dem bestimmten Anteil der belegten geteilten Ressource zu bestimmen, und

einen Wähler (530), der konfiguriert ist, um einen Transportkanaltyp zu wählen, der minimale Leistungskosten hat, um den MBMS-Dienst an das UE bereitzustellen.

11. Funknetzsteuerung (Radio Network Controller, RNC) nach Anspruch 10, wobei die Typen verfügbarer Transportkanäle in der Zelle Abwärts-Zugriffskanal (Forward Access Channel, FACH), Festgeschalteten Kanal (Dedicated Control Channel, DCH) und Hochgeschwindigkeits-Downlink-Kanal (High Speed-Downlink Shared Channel, HS-DSCH) enthalten.

12. Funknetzsteuerung (Radio Network Controller, RNC) nach Anspruch 10, wobei die Bestimmungseinheit konfiguriert ist, um einen Durchsatz eines HS-DSCH-Kanals für den Standortfaktor zu erhalten, um einen Anteil einer HS-DSCH-Ressource, die vom MBMS-Dienst belegt wird, auf Grundlage des geforderten Diensttarifs für den erhaltenen Durchsatz zu schätzen, und um die Leistungskosten für den HS-DSCH-Kanal beruhend auf einem Leistungspegel, der dem HS-DSCH-Kanal zugewiesen ist, und dem bestimmten Anteil an der belegten HS-DSCH-Ressource zu bestimmen; oder wobei die Bestimmungseinheit konfiguriert ist, um einen Leistungspegel für einen FACH-Kanal beruhend auf dem geforderten Diensttarif und dem Standortfaktor zu schätzen, und um die Leistungskosten für den FACH-Kanal beruhend auf dem geschätzten Leistungspegel und der Anzahl von UEs, die vom FACH-Kanal mit dem geschätzten Leistungspegel bedient werden, zu bestimmen; oder wobei die Bestimmungseinheit konfiguriert ist, um einen Leistungspegel für einen DCH-Kanal beruhend auf dem geforderten Diensttarif und dem Standortfaktor zu schätzen, und um die Leistungskosten für den DCH-Kanal beruhend auf dem geschätzten Leistungspegel zu bestimmen.

13. Funknetzsteuerung (Radio Network Controller, RNC) nach Anspruch 9, wobei die Bestimmungseinheit konfiguriert ist, um die Leistungskosten wie folgt zu berechnen:

$$C_{HS} = P_{HS}*(R/Th(L));$$

$$C_{FACH} = P_{FACH}(L,R)*(TS/N_{slot})/N_{UE},$$

und

$$C_{DCH} = P_{DCH}(L,R);$$

wobei $C_{HS}$, $C_{FACH}$, $C_{DCH}$ die Leistungskosten für jeweils HS-DSCH, FACH und DCH bezeichnen,
$P_{HS}$, $P_{FACH}$, $P_{DCH}$ Leistungspegel für jeweils HS-DSCH, FACH und DCH bezeichnen,
R der geforderte Diensttarif ist, L der Standortfaktor ist,
Th(L) der Durchsatz des HS-DSCH-Kanals in Bezug auf den Standortfaktor L ist,
TS sich auf die Anzahl Zeitschlitze pro Rahmen bezieht, die vom MBMS-Dienst belegt werden sollen, $N_{slot}$ sich auf die Gesamtanzahl von Zeitschlitzen pro Rahmen bezieht, und $N_{UE}$ die Anzahl von UE ist, die vom FACH-Kanal mit $P_{FACH}$ bedient werden.

14. Funknetzsteuerung (Radio Network Controller, RNC) nach Anspruch 8, wobei der Standortfaktor als ein Verhältnis von Signalleistung, die am UE empfangen wird, und Signalleistung, die von einer Basisstation (120), die die Zelle (110) bedient, übertragen wird, ausgedrückt wird.

**15.** Drahtloses Kommunikationssystem umfassend eine Funknetzsteuerung (Radio Network Controller) nach Anspruch 10.

**Revendications**

**1.** Procédé pour allouer des canaux de transport dans le but de fournir des services de transmission de données multimédia en diffusion/multidiffusion MBMS à un ou plusieurs équipements utilisateurs UE (101-107) dans une cellule (110) d'un réseau sans fil, les services MBMS étant requis par le ou les UE, le procédé comprenant :

l'obtention de paramètres comprenant une vitesse requise par un service MBMS et un facteur de position indiquant la position d'un UE dans la cellule (310),
la détermination du coût énergétique relatif à la fourniture du service MBMS à l'UE pour chacun des types de canaux de transport disponibles dans la cellule sur la base au moins de la vitesse de service requise et du facteur de position (320), et
la sélection d'un type de canal de transport qui a un coût énergétique minimal pour fournir le service MBMS à l'UE (330),
dans lequel l'étape de détermination du coût énergétique comprend :

l'obtention du débit d'un canal partagé pour le facteur de position,
l'estimation de la proportion de la ressource de canal partagé occupée par le service MBMS sur la base du rapport entre la vitesse de service requise et le débit obtenu, et
la détermination du coût énergétique pour le canal partagé sur la base du niveau de puissance attribué au canal partagé et de la proportion déterminée de la ressource de canal partagé occupée.

**2.** Procédé selon la revendication 1, dans lequel les types de canaux de transport disponibles dans la cellule comprennent un canal d'accès avancé FACH, un canal de commande dédié DCH, et un canal partagé en liaison descendante haut débit HS-DSCH.

**3.** Procédé selon la revendication 2, dans lequel le canal partagé est un canal partagé en liaison descendante haut débit HS-DSCH.

**4.** Procédé selon la revendication 1, dans lequel l'étape de détermination comprend :

l'estimation d'un niveau de puissance pour un canal FACH sur la base de la vitesse de service requise et du facteur de position, et
la détermination du coût énergétique pour le canal FACH sur la base du niveau de puissance estimé et du nombre d'UE qui sont servis par le canal FACH au niveau de puissance estimé.

**5.** Procédé selon la revendication 1, dans lequel l'étape de détermination comprend :

l'estimation d'un niveau de puissance pour un canal DCH sur la base de la vitesse de service requise et du facteur de position, et
la détermination du coût énergétique pour le canal DCH sur la base du niveau de puissance estimé.

**6.** Procédé selon la revendication 1, dans lequel l'étape de détermination comprend :

le calcul des coûts énergétiques comme suit :

$$C_{HS} = P_{HS}*(R/Th(L)) \; ;$$

$$C_{FACH} = P_{FACH}(L,R)*(TS/N_{slot})/N_{UE},$$

et

$$C_{DCH} = P_{DCH}(L,R) \; ;$$

où $C_{HS}$, $C_{FACH}$, $C_{DCH}$ désignent les coûts énergétiques pour HS-DSCH, FACH et DCH respectivement, $P_{HS}$, $P_{FACH}$, $P_{DCH}$ désignent les niveaux de puissance pour HS-DSCH, FACH et DCH respectivement, R est la vitesse de service requise, L est le facteur de position, Th(L) est le débit du canal HS-DSCH par rapport au facteur de position L, TS se réfère au nombre de créneaux temporels par trame devant être occupés par le service MBMS, $N_{slot}$ se réfère au nombre total de créneaux temporels par trame, et $N_{UE}$ est le nombre d'UE servis par le canal FACH à $P_{FACH}$.

7. Procédé selon la revendication 1, dans lequel le facteur de position est exprimé par le rapport de la puissance de signal reçue à l'UE à la puissance de signal transmise par une station de base (120) qui sert la cellule (110).

8. Procédé selon la revendication 1, dans lequel l'allocation est déclenchée quand un nouvel UE requiert le service MBMS ou un UE existant quitte le service MBMS (440).

9. Procédé selon la revendication 1, dans lequel l'allocation est déclenchée à un intervalle de temps (450).

10. Contrôleur de réseau radio RNC (500) pour allouer des canaux de transport dans le but de fournir des services de transmission de données multimédia en diffusion/multidiffusion MBMS à un ou plusieurs équipements utilisateurs UE (101-107) dans une cellule (110) d'un réseau sans fil, le RNC comprenant :

   une unité d'obtention (510) qui est configurée pour obtenir des paramètres comprenant une vitesse requise par un service MBMS et un facteur de position indiquant la position d'un UE dans la cellule, une unité de détermination (520) qui est configurée pour déterminer le coût énergétique de la fourniture du service MBMS à l'UE pour chaque type de canaux de transport disponibles dans la cellule sur la base au moins de la vitesse de service requise et du facteur de position, et en outre configurée pour :

   obtenir un débit d'un canal partagé pour le facteur de position, estimer une proportion d'une ressource partagée occupée par le service MBMS sur la base du rapport entre la vitesse de service requise et le débit obtenu, et déterminer le coût énergétique pour le canal partagé sur la base du niveau de puissance attribué au canal partagé et de la proportion déterminée de la ressource partagée occupée, et un sélecteur (530) qui est configuré pour sélectionner un type de canal de transport qui a un coût énergétique minimal pour fournir le service MBMS à l'UE.

11. Contrôleur de réseau radio RNC selon la revendication 10, dans lequel les types de canaux de transport disponibles dans la cellule comprennent un canal d'accès avancé FACH, un canal de commande dédié DCH, et un canal partagé en liaison descendante haut débit HS-DSCH.

12. Contrôleur de réseau radio RNC selon la revendication 10, dans lequel l'unité de détermination est configurée pour obtenir un débit d'un canal HS-DSCH pour le facteur de position, estimer une proportion de la ressource HS-DSCH occupée par le service MBMS sur la base du rapport de la vitesse de service requise au débit obtenu, et déterminer le coût énergétique pour le canal HS-DSCH sur la base du niveau de puissance attribué au canal HS-DSCH et de la proportion déterminée de la ressource HS-DSCH occupée ; ou dans lequel l'unité de détermination est configurée pour estimer un niveau de puissance pour un canal FACH sur la base de la vitesse de service requise et du facteur de position, et déterminer le coût énergétique pour le canal FACH sur la base du niveau de puissance estimé et du nombre d'UE qui sont servis par le canal FACH au niveau de puissance estimé ; ou dans lequel l'unité de détermination est configurée pour estimer un niveau de puissance pour un canal DCH sur la base de la vitesse de service requise et du facteur de position, et déterminer le coût énergétique pour le canal DCH sur la base du niveau de puissance estimé.

13. Contrôleur de réseau radio RNC selon la revendication 9, dans lequel l'unité de détermination est configurée pour calculer les coûts énergétiques comme suit :

$$C_{HS} = P_{HS} * (R/Th(L)) \; ;$$

$$C_{FACH} = P_{FACH}(L,R) * (TS/N_{slot})/N_{UE},$$

et

$$C_{DCH} = P_{DCH}(L,R) \; ;$$

où $C_{HS}$, $C_{FACH}$, $C_{DCH}$ désignent les coûts énergétiques pour HS-DSCH, FACH et DCH respectivement,
$P_{HS}$, $P_{FACH}$, $P_{DCH}$ désignent les niveaux de puissance pour HS-DSCH, FACH et DCH respectivement,
R est la vitesse de service requise, L est le facteur de position,
Th(L) est le débit du canal HS-DSCH par rapport au facteur de position L,
TS se réfère au nombre de créneaux temporels par trame devant être occupés par le service MBMS, $N_{slot}$ se réfère au nombre total de créneaux temporels par trame, et $N_{UE}$ est le nombre d'UE servis par le canal FACH à $P_{FACH}$.

14. Contrôleur de réseau radio RNC selon la revendication 8, dans lequel le facteur de position est exprimé par le rapport de la puissance de signal reçue à l'UE à la puissance de signal transmise par une station de base (120) qui sert la cellule (110).

15. Système de communication sans fil comprenant un contrôleur de réseau radio selon la revendication 10.

Figure 1

Figure 2

/ 300

Start

Obtaining parameters including a
service rate and a location factor / 310

Determining power cost for each
type of transport channel based / 320
on the parameters

Selecting a type of transport
channels that has a minimum / 330
power cost

End

Figure 3

Requesting MBMS
Service / 410

/ 400

Allocating transport
channel / 420

Fixed interval / 450

Establishing MBMS
service / 430

New user requesting
service/existing user / 440
quitting from service

Figure 4

16

500

510                    520                    530

┌─────────────┐      ┌─────────────┐      ┌─────────────┐
│  Obtaining  │  →   │ Determining │  →   │  Selector   │  →
│    Unit     │      │    Unit     │      │             │
└─────────────┘      └─────────────┘      └─────────────┘

Figure 5

**EP 2 668 802 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1658739 A
- EP 1650989 A